# EUROPEAN PATENT APPLICATION

(11) **EP 4 576 382 A1**
(43) Date of publication of application: **25.06.2025**
(21) Application number: 24767304.9
(22) Date of filing: 13.02.2024
(51) Int. Cl.: H01M 50/367, H01M 50/383, H01M 50/204, H01M 50/30

(54) **BATTERY MODULE WITH REINFORCED SAFETY**

(30) Priority: 09.03.2023 KR 20230031432
(71) Applicant: LG Energy Solution, Ltd., Seoul 07335 (KR)
(72) Inventor: YUN, Hyun-Seop, Daejeon 34122 (KR); KIM, Kwang-Mo, Daejeon 34122 (KR); LEE, Jung-Hoon, Daejeon 34122 (KR); JEONG, Hye-Seok, Daejeon 34122 (KR)
(74) Representative: Plasseraud IP
(86) International application number: PCT/KR2024/002022
(87) International publication number: WO 2024/186015

(57) **Abstract**

A battery module according to the present disclosure may include: a cell assembly including a plurality of battery cells stacked on each other; a module case configured to store the cell assembly in an inner space and having venting holes formed therein; and a cover member including a plurality of fire-resistant layers, which have outlet holes respectively formed therein and are spaced apart from each other, and coupled to an outer surface of the module case such that the venting holes and the outlet holes communicate with each other, wherein the outlet holes of one fire-resistant layer and the outlet holes of the other fire-resistant layer facing the same may be configured so as not to overlap each other.

## Description

### TECHNICAL FIELD

The present disclosure relates to a battery module, and more specifically, it relates to a battery module capable of easily discharging gas generated inside the module through a one-way venting structure provided in a double fire-resistant material at the top of the module and suppressing re-entry of the gas into adjacent modules, thereby preventing chain ignition and explosion.

The present application claims priority to Korean Patent Application No. 10-2023-0031432 filed on March 09, 2023, in the Republic of Korea, the disclosures of which are incorporated herein by reference.

### BACKGROUND ART

Semi-permanent batteries, which convert electrical energy into chemical energy and can be repeatedly charged and discharged, are called secondary batteries distinguished from primary batteries that cannot be reused after use.

Secondary batteries include lithium secondary batteries, nickel-cadmium (Ni-Cd) batteries, lead-acid batteries, nickel-metal hydrogen (Ni-MH) batteries, zinc-air batteries, and alkaline manganese batteries. Among these, lead-acid batteries and lithium secondary batteries are the most widely commercialized secondary batteries.

In particular, lithium secondary batteries have advantages such as high energy storage density, lightweight and miniaturized structures, excellent safety, a low discharge rate, and a long lifespan, so they are widely used as electric vehicle batteries nowadays. For reference, lithium secondary batteries are generally classified into cylindrical, prismatic, and pouch types depending on their manufacturing types, and their uses range from electric vehicle batteries to ESS batteries and other electrical devices.

Currently, the operating voltage of one lithium secondary battery cell is approximately 2.5V to 4.5V. Therefore, in order to apply secondary batteries to an energy source for electric vehicles, a plurality of lithium-ion battery cells are connected in series and/or parallel to produce a battery module, and then the battery modules are connected in series and/or parallel to produce a battery pack.

Meanwhile, since secondary batteries involve chemical reactions during charging and discharging, their performance may deteriorate when used at a temperature higher than an appropriate temperature, and failure of heat control to an appropriate temperature is likely to lead to unexpected ignition or explosion. In addition, since the battery module has a structure in which the secondary batteries are intensively stored inside a module housing, if a thermal event occurs in any one secondary battery as a trigger cell, heat and flame may quickly transfer to adjacent secondary batteries, leading to chain ignition.

In particular, since a maximum number of battery modules must be accommodated in a limited space for integration, there is not enough empty space inside the battery pack. For example, in a battery pack including one or more battery modules, the space between the module case and the pack case may be very narrow.

Therefore, it is necessary to quickly discharge venting gas even in such a narrow space and prevent the discharged venting gas from flowing into other modules, thereby delaying or suppressing thermal propagation (TP).

### DISCLOSURE

### Technical Problem

The present disclosure has been designed to solve the problems of the related art, and therefore the present disclosure is directed to providing a battery module having an improved structure capable of discharging venting gas generated inside the battery module to reduce the internal pressure and preventing flame or the like emitted from other surrounding battery modules from entering the battery module.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module that includes: a cell assembly including a plurality of battery cells stacked on each other; a module case configured to store the cell assembly in an inner space and having venting holes formed therein; and a cover member including a plurality of fire-resistant layers, which have outlet holes respectively formed therein and are spaced apart from each other, and coupled to an outer surface of the module case such that the venting holes and the outlet holes communicate with each other, wherein the outlet holes of one fire-resistant layer and the outlet holes of the other fire-resistant layer facing the same may be configured so as not to overlap each other.

The fire-resistant layer may have two layers, and the fire-resistant layer may include: a first fire-resistant layer having a first outlet hole formed therein; and a second fire-resistant layer having a second outlet hole formed therein.

The cover member may further include a gap member provided between the first fire-resistant layer and the second fire-resistant layer to cause the first fire-resistant layer and the second fire-resistant layer to be spaced a predetermined gap apart from each other.

The second fire-resistant layer may be provided above the first fire-resistant layer, and the first outlet hole and the second outlet hole may communicate with each other.

At least one of the first fire-resistant layer and the second fire-resistant layer may include a plurality of guide members disposed between the first outlet hole and the second outlet hole to guide the discharge of venting gas generated in the module case.

The guide members may be configured to be inclined to widen in a discharge direction of the venting gas.

The cover member may include a base layer; and a fire-resistant coating layer provided over an entire surface of the base layer and coated with a fire-resistant coating material that is detached by pressure of venting gas when the venting gas is generated inside the module case.

The base layer may be disposed between the upper surface of the module case and the first fire-resistant layer.

The base layer may include at least one mesh plate having a plurality of mesh strands and holes; and a support frame disposed at an edge of the mesh plate and supporting the mesh plate.

The fire-resistant coating layer may be configured such that the fire-resistant coating material is bonded to the mesh strand to block the holes.

The fire-resistant coating layer may include one or more inorganic materials selected from ceramic, silicon, silica aerogel, and silica-based inorganic fiber.

A particle size of the inorganic material may be smaller than the hole.

According to one aspect of the present disclosure, there is provided a battery pack including one or more battery modules described above.

### Advantageous Effects

According to one aspect of the present disclosure, even if the space between a battery module and a pack case is narrow in the state in which the battery module is stored inside the pack case, venting gas may be discharged through a zigzag-shaped discharge path provided between two fire-resistant layers, thereby effectively preventing heat accumulation and thermal explosion of the battery module.

In addition, according to one aspect of the present disclosure, the zigzag-shaped discharge path may prevent venting gas or foreign substances discharged from the module from flowing into other adjacent battery modules. Therefore, chain ignition or thermal runaway to a normal battery cell or battery module due to venting gas or flame may be maximally delayed.

In addition, since a double fire-resistant layer is disposed on the top of the module, heat transfer to surrounding modules and thermal runaway according thereto may be minimized.

In addition, since there is no need to form a separate gap or space (open space such as an existing cover) for opening venting holes, it is possible to prevent the energy density of the battery pack from decreasing.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view schematically illustrating a battery module according to an embodiment of the present disclosure.
FIG. 2 is an exploded perspective view of primary elements of the battery module in FIG. 1.
FIG. 3 is a perspective view of a first fire-resistant layer of a cover member in a battery module according to an embodiment of the present disclosure.
FIG. 4 is a perspective view illustrating a state in which a first fire-resistant layer and a second fire-resistant layer are coupled to a battery module according to an embodiment of the present disclosure.
FIG. 5 is a cross-sectional view illustrating the structure of a battery pack including a battery module according to an embodiment of the present disclosure.
FIG. 6 is a partially enlarged view of FIG. 5.
FIGS. 7 and 8 are diagrams schematically illustrating the movement flow of venting gas on the upper surface of the battery module, respectively.
FIG. 9 is a perspective view of a fire-resistant coating layer applied to a base layer and a plate surface in a battery module according to another embodiment of the present disclosure.
FIG. 10 is a diagram schematically illustrating a path through which venting gas is discharged through a cover member in a battery module according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

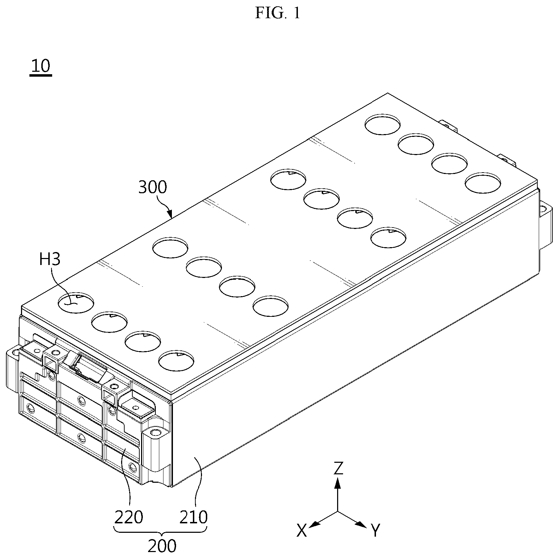

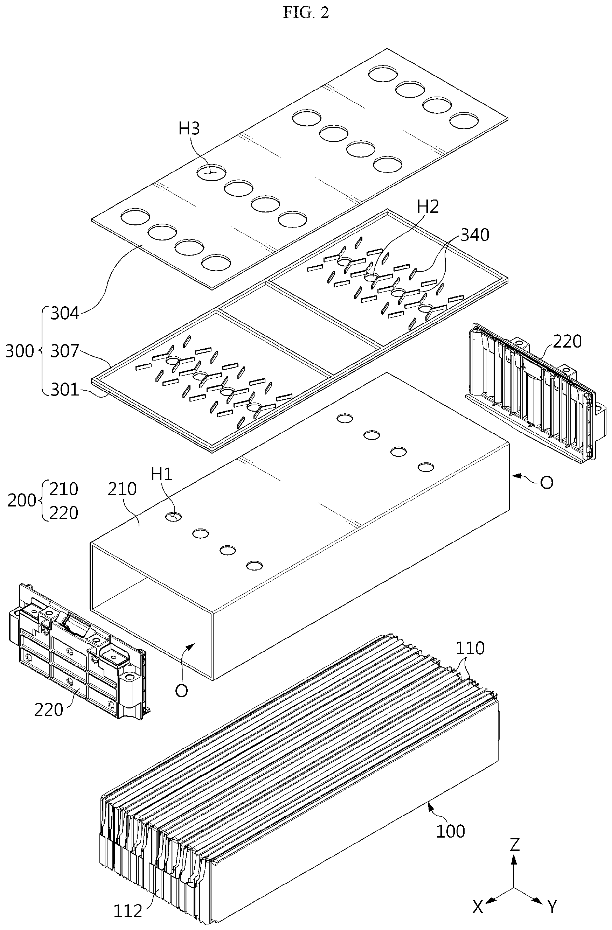

FIG. 1 is a perspective view schematically illustrating a battery module according to an embodiment of the present disclosure, and FIG. 2 is an exploded perspective view of primary elements of the battery module in FIG. 1.

Referring to FIGS. 1 and 2, a battery module 10 according to the present disclosure includes a cell assembly 100, a module case 200, and a cover member 300.

The cell assembly 100 may include one or more battery cells 110. Here, the respective battery cells 110 may indicate secondary batteries. Referring to FIG. 2, the battery cell 110 includes an electrode assembly, a case accommodating the electrode assembly, and a pair of electrode leads 112 connected to the electrode assembly and extending to the outside of the case, thereby functioning as electrode terminals. The pair of electrode leads 112 extends toward both ends of the battery cell 110, that is, in the longitudinal direction.

If necessary, the battery cell 110 may be configured such that the electrode leads 112 are located only at one end of the battery cell 110. Meanwhile, the present disclosure is not limited to the specific type or form of the battery cell 110, and various battery cells 110 known at the time of filing the present disclosure may be used to constitute the cell assembly 100 of the present disclosure. In the present embodiment, although a pouch-type secondary battery, which has high energy density and is easy to stack, will be described, a cylindrical or prismatic secondary battery may also be applied to the battery cell 110.

These battery cells 110 may be arranged to be stacked in at least one direction. In the present embodiment, referring to FIG. 2, the battery cells 110 may be arranged to be stacked in the horizontal direction (the width direction of the battery module 10) (the Y-axis direction) while standing upright in the upward-downward direction (the Z-axis direction).

The cell assembly 100 is a collection of battery cells 110 obtained by stacking a plurality of battery cells 110. That is, the cell assembly 100 may be a group of a plurality of pouch-type battery cells 110 stacked in one direction such that their wide sides stand, as shown in FIG. 2.

The module case 200 may be configured to have an inner space that accommodates the battery cells 110. The module case 200 of the present embodiment may include a case body 210 and end plates 220 disposed on the front and rear sides of the case body 210.

The case body 210 may be configured in the shape of a square tube in a hollow structure having open ends O at both ends in the longitudinal direction (the X-axis direction) and having an empty space therein. For example, the case body 210 may be configured in the form of a tube that has an upper face, a lower face, a left face, and a right face, and has openings formed at the front and rear ends, respectively.

In addition, the module case 200 may be formed in various other forms. For example, the module case 200 may be configured in a form in which a left plate, a right plate, and a bottom plate are integrated with each other. In this case, the integrated case part may be referred to as a "U-frame". A top plate may be welded to the top of the U-frame, thereby configuring a tubular shape. Alternatively, the module case 200 may include a box-shaped lower case in which a left plate, a right plate, a front plate, and a rear plate are integrated with each other, and an upper cover that closes the top opening of the lower case.

In addition, the case body 210 may be configured such that the battery cells 110 are able to be inserted thereinto in the longitudinal direction. That is, the case body 210 may be configured to insert the battery cells 110 therein using a sliding or press-fitting manner. For press-fitting, there may be almost no gap between the upper and lower faces of the case body 210 and the upper and lower ends of the battery cells 110, and there may also be almost no gap between both side faces of the case body 210 and both side portions of the battery cells 110. This case body 210 may be made of a metal material with rigidity and heat resistance in order to physically or chemically protect the accommodated battery cells 110.

The end plate 220 may be coupled to the open end O of the case body 210 to face one side of the cell assembly 100 where the electrode leads 112 of the battery cells 110 are located such that a portion where the electrode leads 112 are fixedly connected to the bus-bars on the bus-bar frame is not exposed to the outside. For example, the end plate 220 may be made of an insulating material on the inner side and a metal material on the outer side, and may be coupled to the case body 210 by welding. Meanwhile, although not shown in the drawings for convenience, the end plate 220 may be partially provided with holes or slits to expose components that need to be exposed to the outside, such as positive and negative electrode terminals or connectors of the battery module 10.

The module case 200 in this configuration may have venting holes H1 formed on at least one side thereof. As indicated by H1 in FIG. 2, a plurality of venting holes H1 may be formed close to the left and right edges on the upper surface of the module case 200. This venting holes H1 may be configured to discharge venting gas, generated and ejected from the cell assembly 100 stored in the inner space, to the external space of the module case 200. For example, the module case 200 may be configured to be sealed, excluding the venting holes H1. In addition, the venting hole H1 may be formed to be completely open to penetrate the module case 200 in the inner and outer directions.

Although the venting hole H1 is configured in a circular shape in the present embodiment, it may be a slot formed long in the longitudinal direction, and any shape capable of effectively discharging venting gas may be applied.

The cover member 300 may be disposed on the outer side of the module case 200 and may be provided at the top of the module case 200 in the present embodiment, as shown in FIGS. 1 and 2. Accordingly, it may be configured to cover the venting holes H1 formed on the upper surface of the module case 200.

The cover member 300 may include a plurality of fire-resistant layers 301 and 304, which have outlet holes H2 and H3, respectively, and are spaced apart from each other, and a gap member 307 that causes the plurality of fire-resistant layers 301 and 304 to be spaced apart from each other.

The fire-resistant layers 301 and 304 may be configured to have substantially the same size as the upper surface of the battery module 10 and made of a fire-resistant material. For example, a MICA material may be adopted. Accordingly, it may withstand heat caused by venting gas, flame, and sparks generated when a thermal event occurs, and may suppress TP, such as propagation to adjacent modules.

Outlet holes H2 and H3 may be formed on the fire-resistant layers 301 and 304. In addition, the outlet holes H2 and H3 may be provided to communicate with the venting holes H1. That is, the venting holes H1 of the module case 200 and the plurality of outlet holes H2 and H3 respectively formed in the plurality of fire-resistant layers 301 and 304 may communicate with each other. As described above, the venting gas generated from the module and discharged through the venting holes H1 may be easily discharged through the venting structure provided between the plurality of fire-resistant layers 301 and 304.

In addition, the plurality of fire-resistant layers 301 and 304 may be configured such that the outlet holes H2 of one fire-resistant layer 301 and the outlet holes H3 of the other fire-resistant layer 304 facing the same do not overlap each other. That is, the outlet holes H2 of one fire-resistant layer 301 and the outlet holes H3 of the other fire-resistant layer 304 adjacent thereto may be disposed at different positions from each other.

Accordingly, venting gas or foreign substances discharged from the module may be prevented from flowing into other adjacent battery modules 10. That is, the inflow of gas into adjacent modules may be minimized by the zigzag-shaped discharge path formed in the plurality of fire-resistant layers 301 and 304. This will be explained in detail in the following description of the cover member 300.

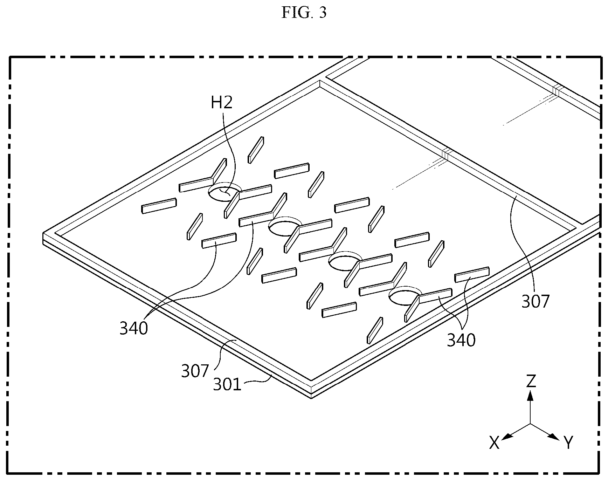

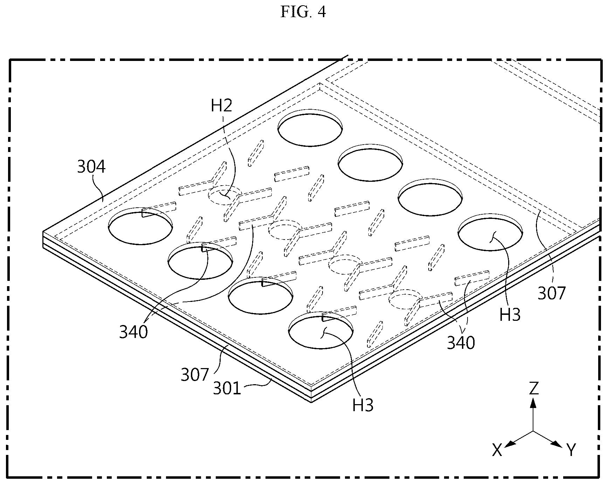

FIG. 3 is a perspective view of a first fire-resistant layer of a cover member in a battery module according to an embodiment of the present disclosure, and FIG. 4 is a perspective view illustrating a state in which a first fire-resistant layer and a second fire-resistant layer are coupled to a battery module according to an embodiment of the present disclosure.

Referring to FIGS. 2 to 4, the cover member 300 may include a plurality of fire-resistant layers 301 and 304, and a gap member 307 that is provided between the plurality of fire-resistant layers 301 and 304 and causes the plurality of fire-resistant layers 301 and 304 to be spaced apart from each other.

Referring to FIG. 2, the fire-resistant layers 301 and 304 have two layers, and the fire-resistant layers 301 and 304 may include a first fire-resistant layer 301 in which first outlet holes H2 are formed and a second fire-resistant layer 304 in which second outlet holes H3 are formed.

The first fire-resistant layer 301 may be disposed directly on top of the module case 200. In addition, a plurality of first outlet holes H2 may be formed in the surface of the first fire-resistant layer 301 at positions corresponding to the positions of the venting holes H1 such that the first outlet holes H2 may communicate with the venting holes H1. The first fire-resistant layer 301 may primarily serve to protect the module from heat due to the venting gas or flame generated from an adjacent module.

In addition, a plurality of guide members 340 may be provided on at least one of the first fire-resistant layer 301 and the second fire-resistant layer 304. In the present embodiment, although the guide members 340 are provided on the surface of the first fire-resistant layer 301 for convenience of explanation, they may be provided on the lower surface of the second fire-resistant layer 304, as well as on the upper surface of the first fire-resistant layer 301, and may be formed at the same height on the first fire-resistant layer 301 and the second fire-resistant layer 304 to be combined with each other.

Referring to FIGS. 3 and 4, the guide members 340 may be disposed between the first outlet holes H2 and the second outlet holes H3 to guide the discharge of venting gas generated from the module case 200. Specifically, the guide member 340 may be configured to be inclined to widen in a discharge direction of the venting gas. Referring to FIG. 3, a pair of guide members 340 may be provided to extend from the first outlet hole H2 and widen in the X-axis direction and -X-axis direction, respectively. Accordingly, the guide members 340 may guide or assist the one-way venting flow of gas, which will be described later. Meanwhile, the guide member 340 may be configured to have substantially the same height as that of the gap member 307, and accordingly, the top of the guide member 340 may be in contact with the lower surface of the second fire-resistant layer 304.

The second fire-resistant layer 304 may be provided above the first fire-resistant layer 301, as shown in FIGS. 2 and 4. Like the first fire-resistant layer 301, the second fire-resistant layer 304 may be made of a fire-resistant material, preferably, a MICA material.

A plurality of second outlet holes H3 may be formed on the surface of the second fire-resistant layer 304, and the second outlet holes H3 may be provide on the venting flow path from the first outlet holes H2 to the guide members 340. The size of the second outlet hole H3 may be greater than the size of the first outlet hole H2. Alternatively, if necessary, the size of the second outlet hole H3 may be the same as that of the first outlet hole H2 or may be less than that of the first outlet hole H2.

The gap member 307 may be provided between the first fire-resistant layer 301 and the second fire-resistant layer 304 and may cause the first fire-resistant layer 301 and the second fire-resistant layer 304 to be spaced a predetermined gap apart from each other.

The gap member 307 may be provided along the edge of the first fire-resistant layer 301, and a plurality of gap members 307 may be provided in the width direction as shown in FIG. 3. The gap members 307 may maintain a uniform gap between the first fire-resistant layer 301 and the second fire-resistant layer 304 over the entire surfaces thereof. In addition, the guide members 340, as well as the gap members 307, may be configured to maintain the gap.

Although not shown in the drawing, the gap member 307 may provide coupling positions for coupling the first and second fire-resistant layers 301 and 304 to each other. The coupling may be performed in various ways such as bolting or welding. Since the gap member 307 is provided as described above, the first fire-resistant layer 301 and the second fire-resistant layer 304 may form a strong structure despite pressure changes due to venting gas and secure structural resistance to distortion or bending.

The cover member 300 with the above configuration may withstand heat caused by venting gas, flame, sparks, or the like generated when a thermal event occurs, and may suppress TP such as propagation to adjacent modules.

According to this implemented configuration, even if the space between the battery module 10 and the pack case is narrow in the state in which the battery module 10 is stored inside the pack case, venting gas may be discharged through a zigzag-shaped discharge path provided between two fire-resistant layers, thereby effectively preventing heat accumulation and thermal explosion of the battery module 10.

In addition, the zigzag-shaped discharge path may prevent venting gas or foreign substances discharged from the module from flowing into other adjacent battery modules 10. Therefore, chain ignition or thermal runaway to a normal battery cell or battery module 10 due to venting gas or flame may be maximally delayed.

In addition, since a double fire-resistant layer is disposed on the top of the module, heat transfer to surrounding modules and thermal runaway according thereto may be minimized. In addition, since there is no need to form a separate gap or space for opening venting holes H1, it is possible to prevent the energy density of the battery pack from decreasing.

In the existing module, a cover is provided on the top of the battery cell, and when gas is vented from the battery cell below the cover, the cover ruptures upward to form a hole and discharge the gas, which requires an open space above the cover for the cover to rupture upward. If there is not enough open space, the cover does not rupture sufficiently when gas is discharged, resulting in insufficient hole opening. On the other hand, according to the present disclosure, since the outlet holes H2 and H3 are formed as through-holes in a zigzag pattern on the cover member 300, instead of a rupture type, there is no need to form an open space such as an existing cover. According to the present disclosure, design freedom may be increased by securing a gap between the pack case and the cover member 300.

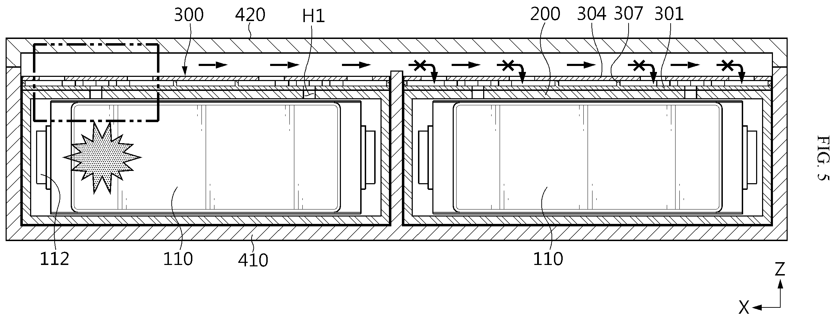

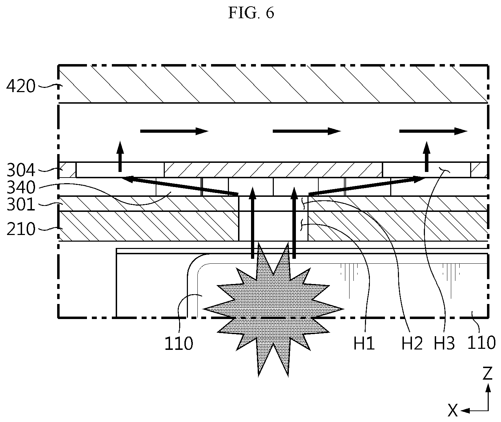

FIG. 5 is a cross-sectional view illustrating the structure of a battery pack including a battery module according to an embodiment of the present disclosure, FIG. 6 is a partially enlarged view of FIG. 5, and FIGS. 7 and 8 are diagrams schematically illustrating the movement flow of venting gas on the upper surface of the battery module, respectively.

Referring to FIG. 5, the battery module 10 is stored inside a pack case (a pack tray 410 and a pack cover 420). A cover member 300 may be disposed on the upper surface of the battery module 10, and the first fire-resistant layer 301 and the second fire-resistant layer 304 may cover the top of the battery module 10 such that it may withstand heat caused by venting gas, flame, and sparks, or the like generated when a thermal event occurs, and may suppress TP, such as propagation to adjacent modules.

In addition, referring to FIGS. 5 and 6, the first outlet holes H2 are disposed directly above the venting holes H1 such that the venting holes H1 are in communication with the first outlet holes H2, and the second outlet holes H3 are spaced apart by the gap between the first fire-resistant layer 301 and the second fire-resistant layer 304 and disposed to not overlap and not align with the first outlet holes H2. Accordingly, although the venting holes H1 may communicate with the first outlet hole H2 and the second outlet hole H3 in sequence, thereby forming a discharge path in a zigzag pattern.

If a large amount of venting gas is generated due to ignition of a specific battery cell, the gas is ejected through the venting holes H1 formed at the top, passes through the first outlet holes H2, and collides with the bottom wall of the second fire-resistant layer 304. Accordingly, the gas turns to the left and right from the first outlet holes H2 and is discharged through the second outlet holes H3 spaced by a predetermined distance. Ultimately, the venting flow forms a zigzag-shaped venting path as shown in FIG. 6.

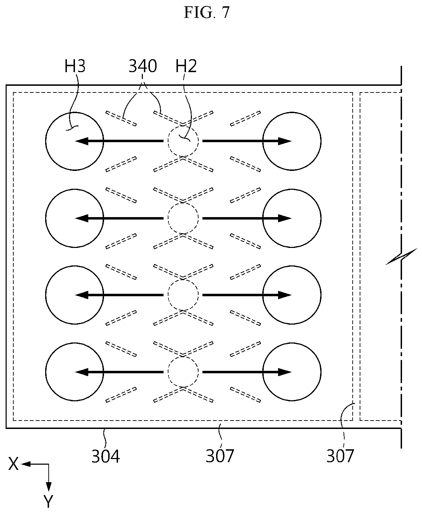

In addition, referring to FIG. 7, a plurality of guide members 340 disposed between the first outlet holes H2 and the second outlet holes H3 guide the venting gas in one direction to be easily discharged. As described above, the venting gas discharged through the venting holes H1 may be easily discharged through the zigzag-shaped venting path provided between the first fire-resistant layer 301 and the second fire-resistant layer 304, thereby effectively preventing heat accumulation and thermal explosion of the battery module 10.

Meanwhile, venting gas generated from the left battery module 10 in FIG. 5 may move to the right inside of the pack case. In this case, there is a risk of venting gas entering the right battery module 10.

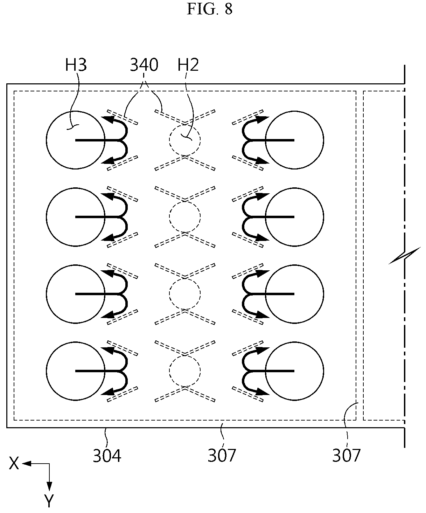

In this case, as shown in FIG. 8, since the second outlet holes H3 and the first outlet holes H2 are disposed at different positions to not overlap each other, the inflow of venting gas may be prevented. That is, although the second outlet hole H3 of the second fire-resistant layer 304 and the first outlet hole H2 of the first fire-resistant layer 301 are in communication with each other, they are spaced a predetermined distance apart from each other, and a plurality of guide members 340 are on the flow path, so that the gas may be blocked from entering the battery module 10 through the venting holes H1.

As described above, even if the space between the battery module 10 and the pack case is narrow in the state in which the battery module 10 is stored inside the pack case, venting gas may be discharged through a zigzag-shaped discharge path provided between two fire-resistant layers, thereby effectively preventing heat accumulation and thermal explosion of the battery module 10.

In addition, the zigzag-shaped discharge path may prevent venting gas or foreign substances discharged from the module from flowing into other adjacent battery modules 10. In particular, the plurality of guide members 340 provided on the flow path may block the gas from entering the battery module 10 through the venting holes H1. Therefore, chain ignition or thermal runaway to a normal battery cell or battery module 10 due to venting gas or flame may be maximally delayed.

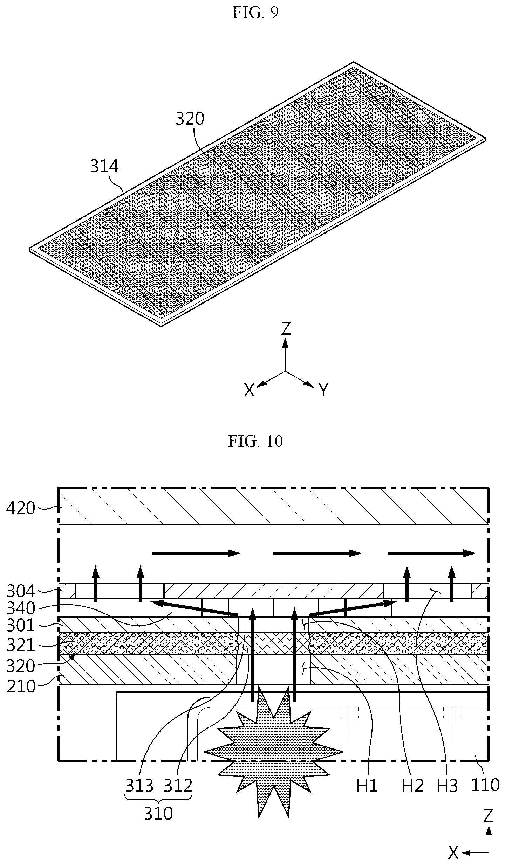

Next, other embodiments of the battery module 10 according to the present disclosure will be briefly described with reference to FIGS. 9 and 10.

FIG. 9 is a perspective view of a fire-resistant coating layer applied to a base layer and a plate surface in a battery module according to another embodiment of the present disclosure, and FIG. 10 is a diagram schematically illustrating a path through which venting gas is discharged through a cover member in a battery module according to another embodiment of the present disclosure.

The same reference numerals in FIGS. 9 and 10 as in the previous drawings may indicate the same members, and redundant descriptions of the same members will be omitted and the description will focus on the differences from the above-described embodiment.

Referring to FIG. 10, the cover member, in addition to the first fire-resistant layer 301 and the second fire-resistant layer 304, includes a base layer 310 coupled to the module case 200 so as to come into contact with the upper surface thereof, and a fire-resistant coating layer 320 coated with a fire-resistant coating material 321 that is detached by the pressure of venting gas when the venting gas is generated inside the module case 200.

Here, the base layer 310 may be disposed between the upper surface of the module case 200 and the first fire-resistant layer 301. The base layer 310 may be coupled to the module case 200 so as to come into contact with the upper surface thereof, and may have substantially the same size as the upper surface of the module case 200.

The base layer 310 may be at least one mesh plate having a plurality of mesh strands 312 and holes 313. This base layer 310 may be configured to block high-temperature flame and sparks that may travel with venting gas. The base layer 310 may be disposed to completely cover the venting holes H1, thereby blocking the entry and exit of flame or sparks into or from the venting holes H1. As a result, it is possible to sufficiently filter and block flame or sparks accompanying the discharged venting gas and prevent exit thereof to the outside of the battery pack, thereby minimizing the risk of ignition of structures around the battery pack or other battery packs.

In addition, referring to FIG. 9, the base layer 310 may include a support frame 314 disposed at the edge of the mesh plate and supporting the mesh plate. Even if the mesh plate is exposed to high temperatures, the support frame 314 may firmly hold the mesh plate to prevent distortion, deformation, or damage to the plate.

The base layer 310 may include a fire-resistant coating layer 320 provided therein, and the fire-resistant coating layer 320 may be configured to have a fire-resistant coating material 321 that is applied thereto and detached therefrom, when venting gas is generated inside the module case 200, by the pressure of the venting gas.

The fire-resistant coating layer 320 may be provided over an entire surface of the base layer 310.

Referring to FIG. 10, the fire-resistant coating layer 320 may be configured such that the fire-resistant coating material 321 is bonded to the mesh strands 312 to block the holes 313. Here, the fire-resistant coating layer 320 may include one or more inorganic materials selected from ceramic, silicon, silica aerogel, and silica-based inorganic fiber. In addition, the particle size of the inorganic material may be smaller than the hole 313.

In addition, the fire-resistant coating layer 320 may further include a binder that bonds the fire-resistant coating material 321 to the mesh strand 312, and various additives. The binder may be a metal-friendly resin, for example, polyvinyl acetal resin, acrylic resin, polyvinyl chloride resin, polyolefin resin, and epoxy resin. The binder includes a fire-resistant coating material 321 and facilitates attachment to the mesh strand 312. In addition, the additives may include adhesion enhancers, dispersants, release agents, heat stabilizers, antioxidants, or the like

The fire-resistant coating layer 320 may be provided over the entire section of the base layer 310 in the thickness direction thereof, or the fire-resistant coating layer 320 may be provided in a portion in the thickness direction of the base layer 310.

Various methods may be considered for the process of applying this fire-resistant coating layer 320 to the base layer 310. For example, a coating solution may be prepared by dissolving the fire-resistant coating material 321 in an adhesive solvent, and then an application process may be performed by spraying the coating solution. Depending on the viscosity of the coating solution, the number of sprays may vary, and the time and temperature in post-processes such as drying may also be controlled in various ways. Alternatively, the application process may be performed by immersing the base layer 310 in a bath of coating solution.

According to this implemented configuration, the cover member may further a fire-resistant coating layer that covers the venting holes H1, in addition to the configuration of the first fire-resistant layer 301 and the second fire-resistant layer 304 having a zigzag-shaped discharge path. In addition, as the fire-resistant coating layer 320 is detached due to gas pressure, the venting holes H1 may be opened as necessary, thereby ensuring a sufficient discharge path for the venting gas. The structure in which the base layer 310 is opened and closed by detachment of the fire-resistant coating layer 320 may make it possible to sufficiently secure the discharge path for venting gas even when the space between the battery module 10 and the pack cover 420 (the space between the pack cover and the top of the module) is narrow. Therefore, the venting gas may be quickly discharged to the outside, thereby effectively preventing heat accumulation and thermal explosion of the battery module 10.

In addition, according to this implemented configuration, the venting holes H1 of the adjacent module may be more stably maintained in a closed state, compared to the first embodiment, by the fire-resistant coating layer 320 having heat resistance. Accordingly, it is possible to prevent external foreign substances, venting gas discharged to the outside of the battery module 10, or flame or sparks contained in such venting gas from flowing into other venting holes H1. It is possible to maximally delay chain ignition or thermal runaway to a normal battery cell 110 or battery module 10 due to venting gas or flame.

A battery pack according to the present disclosure may include one or more battery modules according to the present disclosure described above. In particular, in order to increase capacity and/or output, the battery pack according to the present disclosure may include multiple battery modules according to the present disclosure. In this case, various configurations described above may be applied to the respective battery modules. For example, each battery module may include the cell assembly 100, the module case 200, and the cover member 300. In addition, these multiple battery modules 10 may be accommodated inside the pack case. Moreover, in the case of a battery module according to an embodiment of the present disclosure, thermal runaway propagation between modules may be effectively prevented even if another battery module is located on the front or rear side.

The battery pack according to the present disclosure may include various other elements of the battery pack, in addition to the battery module or pack case, such as a BMS (Battery Management System), bus-bars, relays, current sensors, fuses, or the like, which are known at the time of filing the present disclosure, in the inner space of the pack case.

A battery module according to the present disclosure or a battery pack according to the present disclosure may be applied to vehicles such as electric vehicles or hybrid vehicles. That is, the vehicle according to the present disclosure may include the battery module according to the present disclosure or the battery pack according to the present disclosure. In addition, the vehicle according to the present disclosure may further include various other elements included in the vehicle, in addition to the battery module or battery pack. For example, the vehicle according to the present disclosure may further include a car body, a motor, and control devices such as an ECU (electronic control unit) in addition to the battery module according to the present disclosure.

In addition, the battery module according to the present disclosure or the battery pack according to the present disclosure may be applied to an energy storage system (ESS). That is, the energy storage system according to the present disclosure may include the battery module according to the present disclosure or the battery pack according to the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Meanwhile, although terms indicating directions such as upward, downward, left, right, forward, and backward directions are used in this specification, it is obvious to those skilled in the art that these terms are only for convenience of explanation and may vary depending on the location of the target object or the location of the observer.

### [Description of Reference Numerals]

| | | | |
|---|---|---|---|
| 10: | Battery module | 100: | Cell assembly |
| 110: | Battery cell | 112: | Electrode lead |
| 200: | Module case | 210: | Case body |
| H1: | Venting hole | 220: | End plate |
| 300: | Cover member | 301: | First fire-resistant layer |
| H2: | First outlet hole | 304: | Second fire-resistant layer |
| H3: | Second outlet hole | 307: | Gap member |
| 310: | Base layer | | |
| 312: | Mesh strand | 313: | Hole |
| 314: | Support frame | 320: | Fire-resistant coating layer |
| 321: | Fire-resistant coating material | 340: | Guide member |
| 420: | Pack cover | | |

## Claims

1. A battery module comprising:
a cell assembly comprising a plurality of battery cells stacked on each other;
a module case configured to store the cell assembly in an inner space and having venting holes formed therein; and
a cover member comprising a plurality of fire-resistant layers, which have outlet holes respectively formed therein and are spaced apart from each other, and coupled to an outer surface of the module case such that the venting holes and the outlet holes communicate with each other,
wherein the outlet holes of one fire-resistant layer and the outlet holes of the other fire-resistant layer facing the same are configured so as not to overlap each other.

2. The battery module according to claim 1,
wherein the fire-resistant layer has two layers, and
wherein the fire-resistant layer comprises:
a first fire-resistant layer having a first outlet hole formed therein; and
a second fire-resistant layer having a second outlet hole formed therein.

3. The battery module according to claim 2,
wherein the cover member further comprises a gap member provided between the first fire-resistant layer and the second fire-resistant layer to cause the first fire-resistant layer and the second fire-resistant layer to be spaced a predetermined gap apart from each other.

4. The battery module according to claim 3,
wherein the second fire-resistant layer is provided above the first fire-resistant layer, and
wherein the first outlet hole and the second outlet hole communicate with each other.

5. The battery module according to claim 2,
wherein at least one of the first fire-resistant layer and the second fire-resistant layer comprises a plurality of guide members disposed between the first outlet hole and the second outlet hole to guide the discharge of venting gas generated in the module case.

6. The battery module according to claim 5,
wherein the guide members are configured to be inclined to widen in a discharge direction of the venting gas.

7. The battery module according to claim 3,
wherein the cover member further comprises:
a base layer; and
a fire-resistant coating layer provided over an entire surface of the base layer and coated with a fire-resistant coating material that is detached by pressure of venting gas when the venting gas is generated inside the module case.

8. The battery module according to claim 7,
wherein the base layer is disposed between the upper surface of the module case and the first fire-resistant layer.

9. The battery module according to claim 7,
wherein the base layer comprises: at least one mesh plate having a plurality of mesh strands and holes; and
a support frame disposed at an edge of the mesh plate and supporting the mesh plate.

10. The battery module according to claim 9,
wherein the fire-resistant coating layer is configured such that the fire-resistant coating material is bonded to the mesh strand to block the holes.

11. The battery module according to claim 9,
wherein the fire-resistant coating layer comprises one or more inorganic materials selected from ceramic, silicon, silica aerogel, and silica-based inorganic fiber.

12. The battery module according to claim 11,
wherein the particle size of the inorganic material is smaller than the hole.

13. A battery pack comprising the battery module according to any one of claims 1 to 12.
